# EUROPÄISCHE PATENTSCHRIFT

(11) **EP 0 431 392 B1**
(45) Veröffentlichungstag und Bekanntmachung des Hinweises auf die Patenterteilung: **21.04.1993**
(21) Anmeldenummer: 90122154.9
(22) Anmeldetag: 20.11.1990
(51) Int. Cl.: B65B 55/10

(54) **Verfahren und Vorrichtung zum Warmformen, Sterilisieren, Füllen und Schliessen von Behältern**
Method and device for heat forming, sterilising, filling and closing packages
Procédé et dispositif pour le formage à chaud, la stérilisation, le remplissage et la fermeture de récipients

(30) Priorität: 06.12.1989 DE 3940346
(43) Veröffentlichungstag der Anmeldung: 12.06.1991
(73) Patentinhaber: Hassia Verpackungsmaschinen GmbH, D-63689 Ranstadt (DE)
(72) Erfinder: Walter, Kurt, W-6475 Glauburg (DE)
(74) Vertreter: Wolf, Günter, Dipl.-Ing.

(56) Entgegenhaltungen:
- EP-A- 0 045 389
- DE-A- 3 031 684
- DE-A- 3 207 426

## Beschreibung

Die Erfindung betrifft ein Verfahren zum Warmformen, Sterilisieren, Füllen und Schließen von Behältern aus einer Folienbahn aus thermoplastischem Kunststoff, bei dem die Folienbahn zum Sterilisieren mit Wasserdampf beaufschlagt wird und bei dem danach aus der Folienbahn die Behälter in einer gekühlten Endausformstation mittels eines sterilen Druckmediums tiefgezogen werden, sowie eine Vorrichtung zur Durchführung des Verfahrens.

Es ist bekannt, daß bei keimanfälligem Füllgut, wie Joghurt, Quark, Sahne, Milch od. dgl., die durch Tiefziehen ausgeformten Behälter bzw. Becher einer Sterilisation bedürfen, wofür schon die verschiedensten Methoden angewendet werden. So ist es nach der DE-A-30 31 684 bekannt, die noch unverformte Folienbahn während ihrer Vorwärmphase zwischen Vorwärmplatten mit sterilisierendem Dampf zu beaufschlagen, wobei danach auch die Ausformung der Behälter mittels unter Druck zugeführtem Dampf bewirkt und die so ausgeformte Folienbahn in steriler Atmosphäre zur Füll- und Abdeckelstation weitergeführt wird. Gemäß DE-A-32 07 426, die ein Verfahren sowie eine Vorrichtung nach dem Oberbegriff des Anspruchs 1 bzw. 5 betrifft ist ferner vorgeschlagen worden, die Dampfzuführung in besonderer Weise zu gestalten, nämlich derart, daß beim Tiefziehen der Behälter in deren Endform gleichzeitig sterilisierender Dampf mit eingebracht und dieser durch den sogenannten Vorstreckstempel aus dem Inneren des in seine Endform gebrachten Behälters abgeführt wird. Ein weiteres Verfahren nach der EP-A-00 45 389 geht von ohne jegliche Sterilisation in der Folienbahn fertig ausgeformten Behältern aus, die im fertig ausgeformten Zustand in eine angepaßte und gekühlte Form verbracht und dann in ihrem Innenraum mit dem sterilisierenden Medium beaufschlagt werden. Wesentlich ist dabei die Kühlung der ausschließlich für die Sterilisation bestimmten Form, an deren der Endform der Behälter angepaßte Formeintiefung die bereits fertig ausgeformten Behälter einseitig gekühlt in Anlage gehalten werden, während die andere Seite der Behälterwandung mit sterilisierendem Medium beaufschlagt wird.

Abgesehen vom grundsätzlich zu fordernden hohen Entkeimungsgrad sind bei derartigen Behandlung folgende Forderungen zu erfüllen: Vermeidung von Kondensatbildung, möglichst hohe Sterilisationstemperaturen, möglichst kurze Taktzeiten beim Folienbahntransport im Interesse möglichst großer Durchsatzleistung der betreffenden Tiefziehmaschine und schließlich Verwendbarkeit möglichst dünnen Folienmaterials, in das die Behälter bzw. Becher eingeformt werden sollen.

Bei den vorgenannten und bekannten Verfahren und den zugehörigen Vorrichtungen zu derenDurchführung können diese Forderungen nur teilweise erfüllt werden, d.h., die Erfüllung der einen oder anderen Forderung ist immer nur dadurch möglich, daß man andere Forderungen ganz oder teilweise unerfüllt läßt.

Der Erfindung liegt somit die Aufgabe zugrunde, ein Verfahren und eine Vorrichtung zu schaffen, mit denen diese Forderungen insgesamt erfüllbar sein sollen.

Diese Aufgabe ist mit einem Verfahren der eingangs genannten Art nach der Erfindung durch die im Kennzeichen des Patentanspruches 1 angeführten Merkmale gelöst. Vorteilhafte Weiterbildungen bezüglich des Verfahrens ergeben sich nach den Unteransprüchen 2 bis 4. Bezüglich der Vorrichtung ist die gestellte Aufgabe mit den Merkmalen des Patentnspruchs 5 gelöst.

Unter "Vorformung", "Vorformphase" und "vorgeformten Behältern" ist in vorliegendem Fall zu verstehen, daß die Behälter in dieser Vorformphase noch nicht ihre Endform erhalten, sondern die Behälter in dieser Phase nur aus mehr oder weniger großen Eintiefungen in der Folienbahn bestehen. Wesentlich ist dabei, daß die Formen der Vorformstation für diese Vorformphase nicht gekühlt, sondern entsprechend beheizbar ausgebildet sind, und daß erst der zweite Teil der Tiefziehstation, der die Endausformstation bildet, kühlbar ausgebildet ist. Da der Vorformvorgang mittels des sterilisierenden Mediums direkt bewirkt wird und gleichzeitig die für diese Vorformphase vorgesehene Formwerkzeuge der Vorformstation beheizt werden, kann es vorteilhaft nicht zu Kondensatbildung während des Vorformens bei gleichzeitiger Sterilisation durch den Wasserdampf kommen. Dies ist gleichzeitig und insoweit zwangsläufig mit höheren Sterilisationstemperaturen verbunden, da in dieser Phase von außen keine Kühlung erfolgt. Während des Vorformens erfolgt natürlich gleichzeitig die Endausformung im vorlaufenden Bereich der Folienbahn innerhalb der unmittelbar nachfolgend angeordneten Endausformstation, die mit einem Druckmedium, vorzugsweise Sterilluft, beaufschlagt und deren Formwerkzeug gekühlt wird, was möglich ist, da hierbei kein Kondensatanfall mehr zu befürchten ist. Da die Folienbahn bereits mit den vorgeformten Behältern bzw. Bechern in die Endausformstation einläuft, nimmt die Endausformung nicht mehr so viel Zeit in Anspruch, wie sie erforderlich wäre, wenn die Ausformung der Behälter in einem Zuge erfolgte. Bedingt durch die möglichen höheren Sterilisationstemperaturen und die Aufteilung des ganzen Vorformungsvorganges in eine Vorform- und eine Endausformphase, die aber bei kontinuierlich getaktetem Durchlauf der Folienbahn gleichzeitig erfolgen, werden dadurch kürzere Taktzeiten erreichbar. Ebenfalls bedingt durch die höheren Temperaturen in der Vorformphase kann die Verwendung von dünnerer Folienbahn in Betracht gezogen werden, da bei den höher anliegenden Temperaturen in der Vorformphase das Folienbahnmaterial besser fließt. Die Endausformbarkeit des Folienbahnmaterials in der Endausformstation ist dabei nicht beeinträchtigt, da die vorgeformt in die Endausformstation einlaufende Folienbahn noch ausreichend erwärmt ist, um in dieser mittels des zugeführten Druckmediums an die Innenwand der Formeintiefung des Formwerkzeuges angelegt werden zu können, die der gewünschten Endform des Behälters bzw. des Bechers entspricht, und weil der Kühleffekt der gekühlten Form in der Endausformstation im wesentlichen erst dann wirksam wird, wenn der vorgeformte Bereich der Folienbahn unmittelbar bei Erreichen der Endform mit der gekühlten Innenwand in Kontakt kommt. Nach auf diese Weise bewirkter Endausformung wird die mit den endausgeformten Behältern versehene Folienbahn in bekannter Weise innerhalb eines Steriltunnels zur Füllstation und zur nachfolgenden Abdeckelstation weitergeführt.

Wenn die Vorformung der Folienbahn nicht mit ggf. vorgewärmter Druckluft erfolgt, was bei unmittelbar nachfolgender Dampfbeaufschlagung in der Vorformstation ebenfalls möglich ist, kann diese auch ohne weiteres sowohl mit dem Dampf zur Sterilisation als auch zusätzlich mit mechanischen Mitteln, wie bekannten Vorstreckstempeln, bewirkt werden. Ohne die Verwendung solcher Vorstreckstempel ist es natürlich notwendig, die Luft bzw. den Wasserdampf mit ausreichendem Druck in den Innenraum der Vorformstation oberhalb der Folienbahn einzuführen, damit überhaupt ein ausreichender Vorformgrad der Folienbahn erreicht werden kann. Bei der Verwendung von mechanischen Mitteln, also Vorstreckstempeln, besteht eine vorteilhafte Weiterbildung des Verfahrens darin, daß mindestens ein Teil des zur Sterilisation und zur Vorformung bestimmten Dampfes durch den Vorstreckstempel zugeführt wird, was sicherstellt, daß auch die Bereiche der Folienbahn mit Dampf beaufschlagt werden, die sonst nur an der Frontfläche des Vorstreckers anliegen würden und somit für das sterilisierende Medium nicht zugänglich wären.

Das erfindungsgemäße Verfahren und seine Vorrichtung zu dessen Durchführung werden nachfolgend anhand der zeichnerischen Darstellung eines Ausführungsbeispieles näher erläutert.

Es zeigt schematisch
- Fig. 1: im Schnitt und in Seitenansicht die Vorrichtung zur Durchführung des Verfahrens und
- Fig. 2: vergrößert und im Schnitt eine besondere Ausführungsform des Vorstreckers.

Die Vorrichtung zur Durchführung des Verfahrens besteht aus taktweise arbeitenden, hier nicht dargestellten Folien-bahntransportelementen und ferner aus Vorwärm-, Tiefzieh-, Befüll- und Abdeckelstationen. Für diese Vorrichtung ist nun wesentlich, daß die gesamte Vorformstation I zweiteilig ausgebildet ist, d.h., aus der V rformstation II und aus der Tiefziehstation bzw. Endansformstation III besteht. Das Formober- und -unterteil 1, 2 der Vorformstation II sind dabei mit Heizeinrichtungen 16 ausgestattet und der Innenraum 3 des Formoberteiles 1 ist mit einem im Takt steuerbaren Dampfzufuhranschluß 4 versehen. Falls mit Druckluft vorgeformt werden soll, ist außer dem steuerbaren Dampfanschluß 4 ein zusätzlicher Druckluftanschluß 4' vorgesehen. Selbstverständlich sind dabei das Formober- und -unterteile 1, 2 mit einer Mehrzahl solcher Innenräume 3 und entsprechenden Vorformeintiefungen 3' versehen, die zueinander in entsprechender Rasteranordnung gemäß der gewünschten Rasteranordnung der an der Folienbahn 18 auszuformenden Behälter bzw. Becher 20 vorhanden sind. Die Vorformeintiefungen 3' können dabei genauso wie die Formeintiefungen im Unterteil 6 der Endausformstation III mit Vakuumkanälen 15 ausgestattet werden. Das Formober- und -unterteil 5, 6 der Endausformstation III ist kühlbar ausgebildet und dafür mit entsprechenden Kühlkanälen 17 ausgestattet. Der Innenraum 7 des Formoberteiles 5 ist mit einem ebenfalls im Takt steuerbaren Sterilluftzufuhranschluß 8 verbunden und hinter der Endausformstation III schließt sich unter Einbezug der Füllstation IV ein bis zur Abdeckelstation V geführter Steriltunnel 9 an.

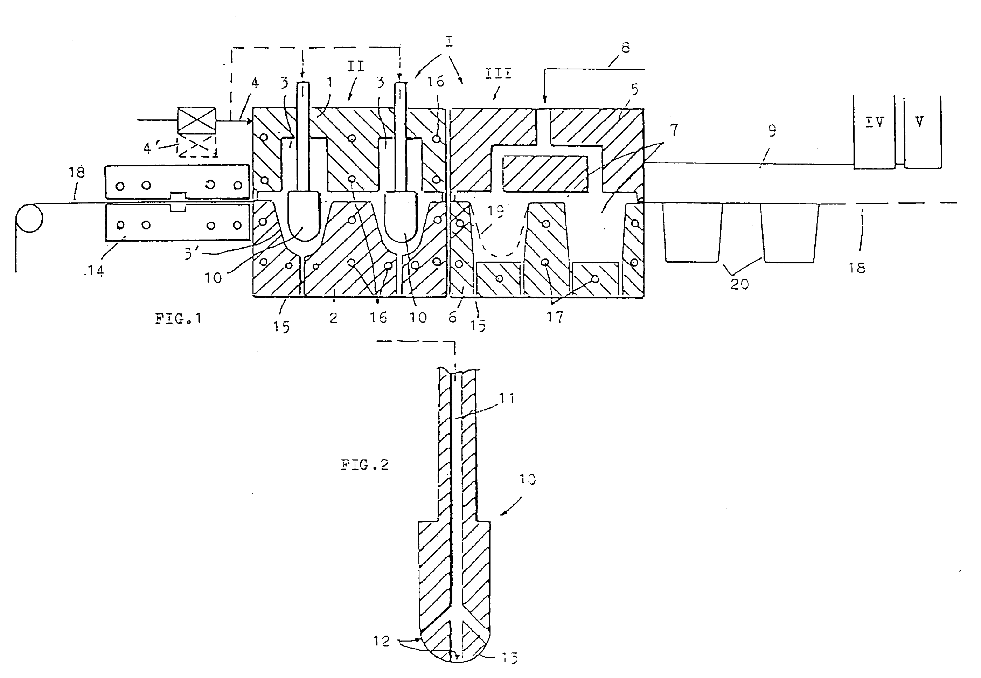

Abgesehen von den Vorformeintiefungen 3' handelt es sich bei allen diesen Elementen, wie auch bei den nicht dargestellten Bewegungselementen für die Betätigung der Formwerkzeuge um an sich bekannte Elemente, die jedoch in Rücksicht auf das damit durchzuführende Verfahren ihre besondere Bedeutung haben, als damit die auszuformende Folienbahn 18, die in der Vorwärmstation 14 vorgewärmt wird, in einer in der Vorformstation II zu bewirkenden Vorformphase mittels Dampf beaufschlagt wird, wobei die Vorformwerkzeuge, also das Formoberteil 1 und das Formunterteil 2 beheizt sind und danach die mit vorgeformten Behältern 19 versehene Folienbahn 18 unter Sterilhaltung in die Endausformstation III übergeführt wird. Das Formunterteil 6 dieser Endausformstation III wird dabei gekühlt, wobei dieser Endausformstation III, d.h. deren Innenraum 7, im Takt gesteuert, Sterilluft unter Druck zugeführt wird, durch die die "Vorformlinge" 19, wie in Fig. 1 gestrichelt angedeutet, zur Anlage an die gekühlte Innenwand der Formeintiefungen in der Endausformstation III gebracht werden. Nach dieser Endausformung, die sich gleichzeitig und parallel zur Vorausformung in der Vorformstation II vollzieht, gelangt die mit den endausgeformten Behältern bzw. Bechern 20 verformte Folienbahn 18 innerhalb des Steriltunnels 9 zunächst zur nur schematisch angedeuteten Füllstation IV und dann weiter durch den Tunnel 9 zur Abdeckelstation V.

Wie vorerwähnt, kann die Vorverformung der Folienbahn 18 in der Vorformstation II mit dort zusätzlich vorgesehenen Vorstreckern bzw. Vorstreckstempeln 10 bewirkt werden, wobei es aber vorteilhaft ist, wie in Fig. 2 dargestellt, die Vorstreckstempel 10 mit einem Dampfzuleitungskanal 11 auszustatten, der mit mindestens einer Dampfausmündung 12 im Bereich seiner vorstreckwirksamen Frontfläche 13 ausgestattet ist. Wie aus Fig. 2 ersichtlich, werden aber mehrere derartiger Dampfausmündungen 12 vorgesehen.

## Patentansprüche

1. Verfahren zum Warmformen, Sterilisieren, Füllen und Schließen von Behältern aus einer Folienbahn aus thermoplastischem Kunststoff, bei dem die Folienbahn zum Sterilisieren mit Wasserdampf beaufschlagt wird und bei dem danach aus der Folienbahn die Behälter in einer gekühlten Endausformstation mittels eines sterilen Druckmediums tiefgezogen werden wonach die auf ihre Gebrauchsform gebrachten Behälter hinter der Endausformstation in steriler Umgebung gefüllt und mit einer Deckfolie verschlossen werden,
**gekennzeichnet durch** folgende Schritte:
Vorwärmen auf Warmformtemperatur und Einführen der warmen Folienbahn in ein beheiztes Vorformwerkzeug, Beaufschlagen der vorgewärmten Folienbahn mit Wasserdampf im Vorformwerkzeug und dabei Vorformen des im Vorformwerkzeug befindlichen Folienbahnbereiches und Weiterführen der vorgeformten Folienbahn in die Endausformstation, die gekühlt wird.

2. Verfahren nach Anspruch 1,
**dadurch gekennzeichnet**,
daß das Vorformen mittels Luft und/oder mittels Wasserdampf erfolgt.

3. Verfahren nach einem der Ansprüche 1 oder 2,
**dadurch gekennzeichnet**,
daß beim Vorformen Vorstreckstempel verwendet werden.

4. Verfahren nach Anspruch 3,
**dadurch gekennzeichnet**,
daß wenigstens ein Teil des Wasserdampfes durch den Vorstreckstempel hindurchgeführt wird.

5. Vorrichtung zur Durchführung des Verfahrens nach Anspruch 1, mit einer die Folienbahn taktweise transportierenden Transporteinrichtung, mit einer Vorwärmstation für die Folienbahn, mit einer kühlbaren Tiefziehstation zum Tiefziehen der Behälter deren Innenraum des Formoberteils (5) einen taktweise steuerbaren Anschluß (8) für das sterile Druckmedium aufweist, mit einer Füllstation zum Füllen der Behälter, und mit einer Abdeckelstation zum Schließen der Behälter, wobei anschließend an die Tiefziehstation (III) bis zur Abdeckelstation (V) die Folienbahn (18) mit den Behältern (20) in einem Steriltunnel (9) geführt ist,
**dadurch gekennzeichnet**,
daß vor der Tiefziehstation (III) eine Vorformstation (II) angeordnet ist,
daß das Formoberteil (1) und das Formunterteil (2) der Vorformstation (II) beheizbar ausgebildet ist,
daß der Innenraum des Formoberteils (1) der Vorformstation (II) einen taktweise steuerbaren Dampfanschluß aufweist,

6. Vorrichtung nach Anspruch 5,
**dadurch gekennzeichnet**,
daß das Formoberteil (1) der Vorformstation (II) einen taktweise steuerbaren Druckluftanschluß (4') aufweist.

7. Vorrichtung nach einem der Ansprüche 5 oder 6,
**dadurch gekennzeichnet**,
daß im Formoberteil (1) der Vorformstation (II) ein Vorsteckstempel (10) angeordnet ist.

8. Vorrichtung nach Anspruch 7,
**dadurch gekennzeichnet**,
daß in dem Vorstreckstempel (10) ein Zuleitungskanal (11) für den Wasserdampf mit mindestens einer Mündung des Zuleitungskanals (11) im Bereich der Frontfläche des Vorstreckstempels (10) angeordnet ist.

## Claims

1. A process of hot-forming, sterilizing, loading and sealing of receptacles made from a foil web of thermoplastic resin, wherein water vapor is applied to the foil web for sterilizing purposes, and wherein the receptacles are deep-drawn from the foil web, in a cooled final mould station, by means of a sterile pressure fluid, whereafter the receptacles placed to their shape of use, behind the final mould station, are loaded in a sterile atmosphere and are sealed by a covering foil,
characterized by the following steps:
preheating to hot-forming temperature and introducing the hot foil web into a heated preforming tool, applying water vapor to the preheated foil web in the preforming tool while simultaneously preforming the foil web area contained in the preforming tool and leading the preformed foil web into the final mould station which is cooled.

2. A process according to claim 1,
characterized in that preforming is effected by air and/or water vapor.

3. A process according to any one of claims 1 or 2,
characterized in that, during preforming, assisting plugs are used.

4. A process according to claim 3,
characterized in that at least part of the water vapor is passed through the assisting plug.

5. A device for carrying out the process according to claim 1, comprising a conveying means for cyclically transporting the foil web, a preheating station for the foil web, a coolable deep-drawing station for deep-drawing the receptacles whose moulding top (5) interior comprises a cyclically controllable connection (B) for the sterile pressure fluid, further comprising a loading station for loading the receptacles, and comprising a lid-covering station for sealing the receptacles, with the foil web (16) along with the receptacles (20) following the deep-drawing station (III) down to the lid-covering station (V) being guided in a sterile tunnel (9),
characterized in that arranged ahead of the deep-drawing station (III) is a preforming station (II), that the moulding top (1) and the moulding bottom (2) of the preforming station (II) are of a heatable configuration, that the interior of the moulding top (1) of the preforming station (II) comprises a cyclically controllable vapor connection.

6. A device according to claim 5,
characterized in that disposed in the moulding top (1) of the preforming station (II) is a cyclically controllable compressed-air connection (4').

7. A device according to any one of claims 5 or 6,
characterized in that disposed in the moulding top (1) of the preforming station (II) is an assisting plug (10).

8. A device according to claim 7,
characterized in that provided in the assisting plug (10) is a feeding channel (11) for the water vapor, with at least one aperture of the feeding channel (11) being disposed in the front face of the assisting plug (10).

## Revendications

1. Procédé pour façonner à chaud, stériliser, remplir et fermer des récipients en une bande de feuille en matière synthétique thermoplastique dans lequel la bande de feuille est chargée de vapeur d'eau pour la stérilisation et dans lequel les récipients sont ensuite emboutis à partir de la bande de feuille à l'aide d'un agent sous pression stérile sous pression dans une station de façonnage final refroidie, ce après quoi les récipients, qui ont obtenu leur forme d'utilisation, sont remplis derrière la station de façonnage final dans un environnement stérile et sont fermés avec une feuille de recouvrement,
**caractérisé par** les étapes suivantes:
préchauffage à la température de façonnage à chaud et introduction de la bande de feuille chaude dans un outil de préformage chauffé, chargement de la bande de feuille préchauffée de vapeur d'eau dans l'outil de préformage et. ce faisant. préformage de la zone de la bande de feuille qui se trouve dans l'outil de préformage et guidage de la bande de feuille préformée dans la station de façonnage final qui est refroidie.

2. Procédé selon la revendication 1,
**caractérisé en ce**
que le préformage se fait au moyen d'air et/ou de vapeur d'eau.

3. Procédé selon l'une des revendications 1 ou 2,
**caractérisé en ce**
que des poinçons de dégrossissage sont utilisés pour le préformage.

4. Procédé selon la revendication 3,
**caractérisé en ce**
qu'au moins une partie de la vapeur d'eau est guidée à travers le poinçon de dégrossissage.

5. Dispositif pour réaliser le procédé selon la revendication 1 avec un dispositif de transport qui transporte la bande de feuille de manière cyclique, avec une station de préchauffage pour la bande de feuille, avec une station d'emboutissage pouvant être refroidie pour l'emboutissage des récipients, dont l'intérieur de la partie supérieure de façonnage (5) présente un raccord (8) qui peut être commandé de manière cyclique pour l'agent sous pression stérile, avec une station de remplissage pour remplir les récipients et avec une station de recouvrement pour fermer les récipients, la bande de feuille (18) avec les récipients (20) étant ensuite guidée dans un tunnel stérile (9) de la station d'emboutissage (III) jusqu'à la station de recouvrement (V),
**caractérisé en ce**
qu'une station de préformage (II) est placée devant la station d'emboutissage (III),
que la partie supérieure de façonnage (1) et la partie inférieure de façonnage (2) de la station de préformage (II) sont configurées en pouvant être chauffées,
que l'intérieur de la partie supérieure de façonnage (1) de la station de préformage (II) présente un raccord de vapeur qui peut être commandé de manière cyclique.

6. Dispositif selon la revendication 5,
**caractérisé en ce**
que la partie supérieure de façonnage (1) de la station de préformage (II) présente un raccord d'air comprimé (4') qui peut être commandé de manière cyclique.

7. Dispositif selon l'une des revendications 5 ou 6,
**caractérisé en ce**
qu'un poinçon de dégrossissage (10) est placé dans la partie supérieure de façonnage (1) de la station de préformage (II).

8. Dispositif selon la revendication 1,
**caractérisé en ce**
qu'un canal d'amenée (11) de la vapeur d'eau est placé dans le poinçon de dégrossissage avec au moins (10) avec au moins une ouverture du canal d'amenée (11) dans la zone de la face frontale du poinçon de dégrossissage (10).
